# DEMANDE DE BREVET EUROPEEN

(11) **EP 4 335 691 A1**
(43) Date de publication de la demande: **13.03.2024**
(21) Numéro de dépôt: 23195639.2
(22) Date de dépôt: 06.09.2023
(51) Int. Cl.: B60N 2/015, B60N 2/24, B61D 33/00

(54) **DISPOSITIF DE FIXATION MODULAIRE POUR UN ÉQUIPEMENT DE SIÈGE DE VÉHICULE FERROVIAIRE**

(30) Priorité: 06.09.2022 FR 2208897
(71) Demandeur: ALSTOM Holdings, 93400 Saint-Ouen-sur-Seine (FR)
(72) Inventeur: CRESPEL, Jean-Noel, 17440 AYTRE (FR)
(74) Mandataire: Lavoix

(57) **Abrégé**

Le dispositif (10) de fixation comporte deux barres de fixation (18) sensiblement horizontales destinées à être fixées à une partie structurelle (14) du véhicule, et des moyens de fixation (20), destinés à être portés par l'équipement de siège (12) et à être fixés aux barres de fixation (18). Le dispositif de fixation (10) comporte une première béquille (30) de reprise d'effort, s'étendant entre une première extrémité destinée à être portée par l'équipement de siège (12), et une seconde extrémité destinée à reposer sur ladite partie structurelle (14) du véhicule.

## Description

La présente invention concerne un dispositif de fixation d'un équipement de siège dans un véhicule de transport public, notamment un véhicule ferroviaire.

On connait déjà, dans l'état de la technique, des véhicules ferroviaires, notamment de type tramway, comportant des équipements de siège propres à recevoir des passagers. Ces équipements de siège nécessitent toutefois généralement des interfaces qui restent à demeure sur la structure du véhicule ferroviaire, telles que des consoles de sièges, des interfaces sur le plancher, et des interfaces sur les parois latérales du véhicule. Ainsi, tout changement dans la disposition des équipements de siège entraine généralement de lourdes modifications.

L'invention a notamment pour but de remédier à cet inconvénient, en proposant un dispositif de fixation permettant aisément un changement dans la disposition des équipements de siège.

A cet effet, l'invention a notamment pour objet un dispositif de fixation d'un équipement de siège dans un véhicule de transport public, notamment un véhicule ferroviaire, comportant deux barres de fixation sensiblement horizontales destinées à être fixées à une partie structurelle du véhicule, et des moyens de fixation, destinés à être portés par l'équipement de siège et à être fixés aux barres de fixation, caractérisé en ce que le dispositif de fixation comporte une première béquille de reprise d'effort, s'étendant entre une première extrémité destinée à être portée par l'équipement de siège, et une seconde extrémité destinée à reposer sur ladite partie structurelle du véhicule.

Un dispositif de fixation selon l'invention peut comporter en outre l'une ou plusieurs des caractéristiques suivantes, prises seules ou selon toutes combinaisons techniquement envisageables.
- Les moyens de fixation comportent, pour chaque barre de fixation, au moins un crochet destiné à s'accrocher sur cette barre de fixation.
- Les moyens de fixation comportent au moins un organe de verrouillage vertical, comprenant une tige mobile entre une position de dégagement, dans laquelle chaque crochet peut être décroché de la barre de fixation correspondante, et une position de verrouillage dans laquelle la barre de fixation est disposée verticalement entre le crochet et la tige.
- Au moins l'un des crochets comporte un pion de verrouillage, destiné à coopérer avec un orifice complémentaire ménagé dans la barre de fixation correspondante.
- La seconde extrémité de la première béquille comporte un patin de protection, par exemple en caoutchouc, destiné à reposer contre ladite partie structurelle.
- La première béquille est conformée pour reposer contre une zone d'appui de la partie structurelle, telle que ladite zone d'appui présente une composante verticale.
- Le dispositif de fixation comprend un revêtement de protection destiné à recouvrir ladite zone d'appui.
- Le dispositif de fixation comprend une seconde béquille, destinée à reposer sur un sol de la partie structurelle.
- Le dispositif de fixation ne comporte pas plus de deux barres de fixation pour la fixation de l'équipement de siège.

L'invention concerne également un véhicule ferroviaire, comportant une partie structurelle, un équipement de siège, et un dispositif de fixation tel que défini précédemment, pour la fixation de l'équipement de siège sur la partie structurelle.

Différents aspects et avantages de l'invention seront mis en lumière dans la description qui va suivre, donnée uniquement à titre d'exemple et faite en se référant aux figures annexées, parmi lesquelles :
[Fig 1] La figure 1 représente schématiquement un dispositif de fixation selon un premier exemple de mode de réalisation de l'invention ;
[Fig 2] La figure 2 représente schématiquement un dispositif de fixation selon un second exemple de mode de réalisation de l'invention.

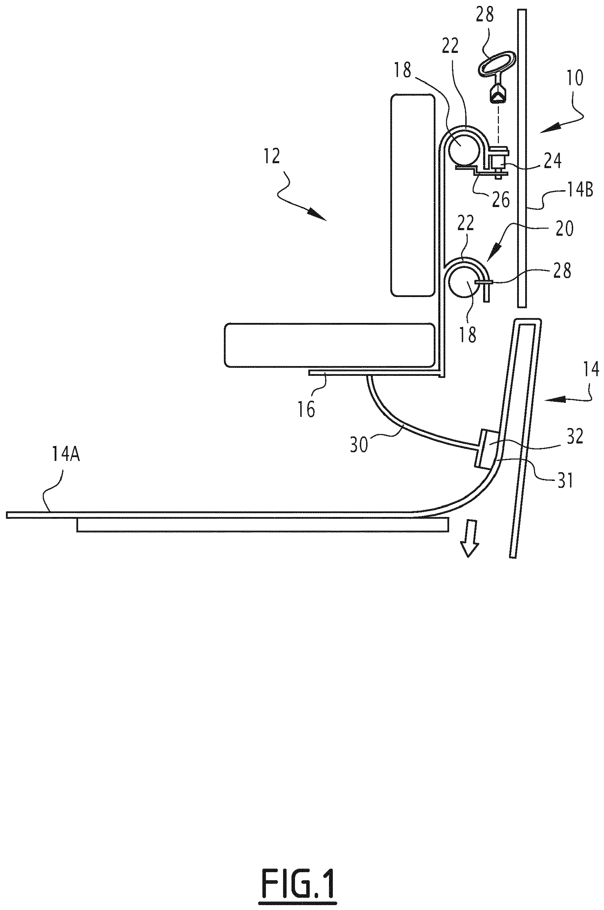

On a représenté, sur la figure 1, un dispositif de fixation 10 pour un équipement de siège 12, destiné à équiper un véhicule ferroviaire, notamment un tramway. Le véhicule ferroviaire comporte une partie structurelle 14, comprenant notamment un plancher 14A et au moins une paroi latérale 14B.

Dans le premier exemple, l'équipement de siège 12 comporte au moins un siège dont le dossier est tourné vers la paroi latérale 14B.

Ce siège est porté par une armature 16 destinée à être accrochée à la partie structurelle 14 du véhicule, comme cela sera décrit ultérieurement.

Le dispositif de fixation 10 comporte deux barres de fixation 18 sensiblement horizontales destinées à être fixées à la partie structurelle 14 du véhicule, plus particulièrement à la paroi latérale 14B. Le dispositif de fixation 10 ne comporte de préférence que deux barres de fixation 18.

Les deux barres de fixation 18 sont de préférence connectées entre elles, à leurs extrémités, par des arceaux, de manière à former une structure oblongue. Ainsi, les deux barres de fixation 18 peuvent être manipulées ensemble lors de leur montage sur la partie structurelle 14, et leur écartement reste constant, imposé par la forme des arceaux.

Les barres de fixation 18 sont fixées à la partie structurelle 14 de toute façon envisageable, par exemple par vissage.

Le dispositif de fixation 10 comporte des moyens de fixation 20, destinés à être portés par l'équipement de siège 12 et à être fixés aux barres de fixation 18. Plus particulièrement, les moyens de fixation 20 sont portés par l'armature de siège 16.

Les moyens de fixation 20 comportent, pour chaque barre de fixation 18, au moins un crochet 22 destiné à s'accrocher sur la barre de fixation 18 correspondante. Ces crochets 22 sont solidaires de l'armature 16.

Les moyens de fixation 20 comportent également au moins un organe 24 de verrouillage vertical, comprenant une tige 26 mobile entre une position de dégagement, dans laquelle chaque crochet 22 peut être décroché de la barre de fixation 18 correspondante, et une position de verrouillage (représentée sur la figure 1) dans laquelle la barre de fixation 18 est disposée verticalement entre l'un des crochets 22 et la tige 26.

La tige 26 est par exemple actionnable au moyen d'une clé 28, par laquelle elle est entrainée entre ses positions, par un quart de tour.

La tige 26 est de préférence conformée pour être en contact de la barre de fixation 18 en position de verrouillage. Ainsi, en position de verrouillage, la barre de fixation 18 est pincée entre la tige 26 et le crochet 22 correspondant.

On notera que les moyens de fixation 20 comportent de préférence plusieurs organes de verrouillage vertical 24.

Avantageusement, les moyens de fixation 20 comportent également au moins un pion de verrouillage 28. Chaque pion de verrouillage 28 est porté par le crochet 22 correspondant, et destiné à coopérer avec un orifice complémentaire prévu dans la barre de fixation 18 correspondante. Ainsi, les pions de verrouillage 28, lorsqu'ils sont verrouillés, permettent d'immobiliser l'équipement de siège 12 dans une direction longitudinale des barres de fixation 18.

Chaque pion de verrouillage 28 est mobile entre une position verrouillée et une position déverrouillée. Le pion de verrouillage 28 est par exemple relié au crochet 22 correspondant par une lame déformable.

Dans l'exemple décrit, le pion de verrouillage 28 est représenté sur la barre de fixation 18 inférieure, mais il pourrait en variante être porté par la barre de fixation supérieure, ou en variante chaque barre de fixation 18 pourrait porter au moins un pion de verrouillage.

Le dispositif de fixation 10 selon l'invention comporte en outre une première béquille 30 de reprise d'effort, s'étendant entre une première extrémité destinée à être portée par l'équipement de siège 12, et une seconde extrémité destinée à reposer sur ladite partie structurelle 14 du véhicule.

Plus particulièrement, la première extrémité est solidarisée à l'armature 16, et la seconde extrémité repose sur une zone d'appui 31 comprenant une composante verticale.

Avantageusement, la seconde extrémité de la première béquille comporte un patin de protection 32, par exemple en caoutchouc, destiné à reposer contre ladite partie structurelle 14.

De préférence, un revêtement de protection recouvre la zone d'appui 31.

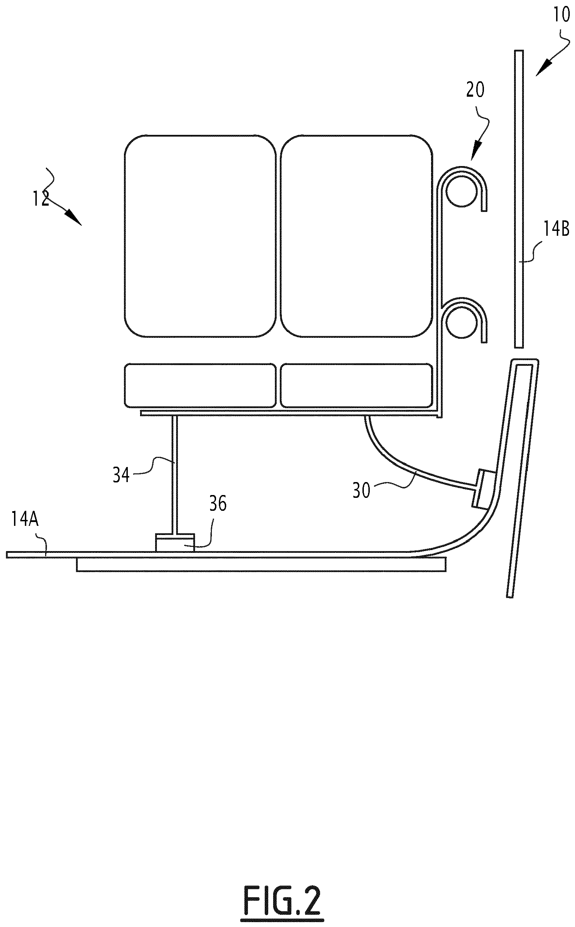

On notera que, conformément à l'exemple de la figure 2, l'équipement de siège 12 peut, en variante, comporter deux sièges dont les dossiers sont perpendiculaires à la paroi latérale 14B. Sur la figure 2, les éléments analogues à ceux de la figure précédente sont désignés par des références identiques.

Les moyens de fixation 20 étant identiques, ils ne sont pas décrits à nouveau.

Cet équipement de siège présentant un porte-à-faux supérieur à celui du premier exemple, le dispositif de fixation 10 comporte de préférence une seconde béquille 34, destinée à reposer sur le sol 14A de la partie structurelle 14.

De préférence, comme la première béquille 30, la seconde béquille 34 comporte un second patin de protection 34, par exemple en caoutchouc, destiné à reposer contre ladite partie structurelle 14.

De préférence, un revêtement de protection recouvre le sol 14A. Le revêtement de protection est par exemple le même que celui recouvrant la zone d'appui 31, ce revêtement s'étendant depuis le sol 14A jusqu'à la zone d'appui 31.

On notera que le dispositif de fixation de l'invention permet de détacher facilement l'équipement de siège 12, par simple manipulation des organes de verrouillage 24 et des pions de verrouillage 28.

L'équipement de siège du premier exemple peut ainsi être remplacé par l'équipement de siège du second exemple, ou par tout autre équipement comprenant des moyens de fixation 20 similaires, par exemple un équipement d'appui ischiatique, ou une paroi d'appui pour fauteuil roulant.

## Revendications

1. Dispositif (10) de fixation d'un équipement de siège (12) dans un véhicule de transport public, notamment un véhicule ferroviaire, comportant deux barres de fixation (18) sensiblement horizontales destinées à être fixées à une partie structurelle (14) du véhicule, et des moyens de fixation (20), destinés à être portés par l'équipement de siège (12) et à être fixés aux barres de fixation (18), **caractérisé en ce que** le dispositif de fixation (10) comporte une première béquille (30) de reprise d'effort, s'étendant entre une première extrémité destinée à être portée par l'équipement de siège (12), et une seconde extrémité destinée à reposer sur ladite partie structurelle (14) du véhicule.

2. Dispositif de fixation (10) selon la revendication 1, dans lequel les moyens de fixation (20) comportent, pour chaque barre de fixation (18), au moins un crochet (22) destiné à s'accrocher sur cette barre de fixation (18).

3. Dispositif de fixation (10) selon la revendication 2, dans lequel les moyens de fixation (20) comportent au moins un organe de verrouillage vertical (24), comprenant une tige (26) mobile entre une position de dégagement, dans laquelle chaque crochet (22) peut être décroché de la barre de fixation (18) correspondante, et une position de verrouillage dans laquelle la barre de fixation (18) est disposée verticalement entre le crochet (22) et la tige (26).

4. Dispositif de fixation (10) selon la revendication 2 ou 3, dans lequel au moins l'un des crochets (22) comporte un pion de verrouillage (28), destiné à coopérer avec un orifice complémentaire ménagé dans la barre de fixation (18) correspondante.

5. Dispositif de fixation (10) selon l'une quelconque des revendications précédentes, dans lequel la seconde extrémité de la première béquille (30) comporte un patin de protection (32), par exemple en caoutchouc, destiné à reposer contre ladite partie structurelle (14).

6. Dispositif de fixation (10) selon l'une quelconque des revendications précédentes, dans lequel la première béquille (30) est conformée pour reposer contre une zone d'appui (31) de la partie structurelle (14), telle que ladite zone d'appui (31) présente une composante verticale.

7. Dispositif de fixation (10) selon la revendication 6, comprenant un revêtement de protection destiné à recouvrir ladite zone d'appui (31).

8. Dispositif de fixation (10) selon l'une quelconque des revendications précédentes, comprenant une seconde béquille (34), destinée à reposer sur un sol (14A) de la partie structurelle (14).

9. Dispositif de fixation (10) selon l'une quelconque des revendications précédentes, ne comportant pas plus de deux barres de fixation (18) pour la fixation de l'équipement de siège (12).

10. Véhicule ferroviaire, comportant une partie structurelle (14), un équipement de siège (12), et un dispositif de fixation (10) selon l'une quelconque des revendications précédentes, pour la fixation de l'équipement de siège (12) sur la partie structurelle (14).
